# EUROPEAN PATENT SPECIFICATION

(11) **EP 0 420 603 B1**
(45) Date of publication and mention of the grant of the patent: **14.08.1996**
(21) Application number: 90310519.5
(22) Date of filing: 26.09.1990
(51) Int. Cl.: G05D 16/06

(54) **Pressure regulator**
Druckregler
Régulateur de pression

(30) Priority: 27.09.1989 US 413315
(43) Date of publication of application: 03.04.1991
(73) Proprietor: Eidsmore, Paul George, Scotts Valley California 95066 (US)
(72) Inventor: Eidsmore, Paul George, Scotts Valley California 95066 (US)
(74) Representative: Jones, Colin

(56) References cited:
- WO-A-87/04765
- FR-A- 1 476 206
- GB-A- 1 569 854
- GB-A- 2 156 496
- US-A- 3 788 339
- US-A- 4 026 314

## Description

This invention pertains to fluid handling components and more particularly to fluid pressure regulators. The invention is applicable to systems that operate from a source of fluid under high pressure and that require a low, substantially steady pressure, independently of variations in the fluid pressure at the source. Although the invention will be described with particular reference to this kind of system, the invention has broader applications and may be advantageously employed in other environments and applications requiring regulation of fluid pressure.

In fluid systems supplied, for example, from a cylinder of compressed fluid at high pressures, it is common practice to install a pressure regulator downstream of a shutoff valve associated with the cylinder. The pressure regulator minimizes the number of components and couplings of the system that must operate at potentially hazardous high pressures. Further, the pressure regulator assures a supply of compressed fluid at a substantially steady, low pressure despite the drop in pressure of the fluid in the cylinder as the fluid is released or used over time.

Prior pressure regulators have suffered from one or more drawbacks some of which will be discussed in general terms below. Various pressure regulators have attempted to address selected ones of these features but no known regulator is deemed to meet all of the following requirements in an effective manner.

Typical regulators employ a bellows or diaphragm that is secured along a peripheral edge to the housing. A potential leak path to outside atmosphere may be established if the diaphragm or bellows fails. When handling high pressure and extremely toxic fluids, containment of the fluid is a primary concern. Therefore, limiting the number of seals or flexible membranes between the system media and atmosphere is another important goal.

WO-87/04765 discloses a pressure regulator comprising a housing and regulating means for preselectively regulating fluid flow between an inlet and an outlet of said housing. Also disclosed is a poppet for opening and closing the communication between the inlet and outlet responsively to the regulating means.

Under high flow rates, available pressure regulators have a tendency to audibly buzz and physically oscillate. Oscillations of the pressure regulator can result in variations in the downstream pressure, even resulting in pressure spikes through the system. Apart from the annoyance of the audible buzz, the pressure spikes can have an adverse effect on the downstream equipment.

Overpressure situations may also adversely affect operation of a pressure regulator. For example, a bellows may be so crimped distorted that orientation of the one end carrying the sealing mechanism may be affected which, in turn can have an adverse impact on fluid pressure regulation. Still another concern, if the bellows fails due to overpressure or for another reason, is that a poppet or valve member of the regulator would be left in an open position and not constrict or regulate flow at all. Obviously, such a situation would be highly undesirable.

Somewhat related to the general goal of a predictable outlet pressure valve is the need to improve the shutoff characteristic of the regulator. In this regard, available pressure regulators do not adequately adapt to tolerance stack-up problems or other alignment problems that may result during use of the regulator.

Yet another continuing problem is the difficulty in repairing known pressure regulators. Oftentimes many components of the regulator may still be fully functional and only a single component requires repair. In such situations, it is desirable that the component be easily replaced without concern towards the overall effect on tolerances and subsequent operation of the regulator.

The present invention contemplates a new and improved pressure regulator that overcomes some or all of the above-referenced problems and others and provides a desired outlet pressure regardless of fluctuations in the system.

According to the present invention there is provided a fluid pressure regulator comprising a fluid pressure regulator comprising a housing having a chamber defined therein; an inlet and an outlet operatively communicating with said chamber; means for selectively regulating fluid flow between said inlet and said outlet via said chamber, said regulating means comprising a first part secured in said chamber, a second part associated therewith and adapted for movement relative to said first part and a sealed axially expansible member connected between the said first and second parts to define therewith an enclosed cavity which is internally pressurised to a predetermined pressure above ambient in order to establish the fluid pressure values at which the second part moves relative to the first part in order to control the opening and closing of the regulator, characterised in that the first part comprises a transverse end wall and an axial sleeve which extends from the end wall towards the inlet, and the second part comprises a transverse end wall and an axial sleeve which extends from the end wall towards the outlet, the said axial sleeves and being slidably received one within the other to form therebetween the cavity, which cavity is in communication with the interior of the sealed axially expansible member and at the same pressure as the interior of the sealed axially expansible member through a radial opening in one of the sleeves and that resilient damping means is provided between the sleeves for damping oscillations thereof under adverse conditions.

According to another aspect of the invention, means for centering a poppet relative to a valve seat or for enabling self centering is provided to improve shut-off characteristics of the regulator.

According to yet another aspect of the invention, a poppet is self-tapping on the stem to facilitate makeup and accurate control of the pressure drop across the valve seat.

According to a still further aspect of the invention, a continuous flow path is defined entirely around the bellows so that if failure of the bellows occurs, the regulator housing still remains hermetically sealed.

A principal advantage of the invention is the ability to accurately maintain an outlet pressure at a desired valve or substantially so.

Another advantage of another aspect of the invention is the ability to compensate for tolerance stack-up problems.

A further advantage of another aspect of the invention is the fail-safe arrangement that shuts off fluid flow should the bellows fail.

Another advantage is the stability of the pressure regulator at high flow rates.

Yet other advantages reside in the preset, non-adjustable, and tamper-proof setting of the pressure regulator, maintaining accurate shut-off characteristics, and ease of repair.

Still another advantage is found in the ease of initially setting the poppet clearance relative to the valve seat.

The invention is further described, by way of example, with reference to the accompanying drawings; wherein:
Fig. 1 is a longitudinal sectional view of a pressure regulator in accordance with the invention;
Fig. 2 is a cross-sectional view substantially along the lines 2-2 of Fig. 1;
Fig. 3 is a cross-sectional view substantially along the lines 3-3 of Fig. 1.
Fig. 4 is a detail, longitudianal sectional view illustrating flexure of a stem clip that retains the poppet assembly;
Fig. 5 is an enlarged sectional view illustrating the range of radial movement of the poppet assembly;
Fig. 6 is a longitudinal sectional view of an alternative pressure regulator in accordance with the invention;
Fig. 7 is a longitudinal sectional view showing initial steps in assembling the pressure regulator of the invention;
Fig. 8 illustrates intermediate steps of assembling the pressure regulator; and
Fig.9 illustrates the final steps of assembling and setting the pressure regulator to a desired value.

Referring now to the drawings, a pressure regulator A is adapted to regulate fluid pressure in an associated fluid system. Although not shown, a source of fluid under high pressure is preferably disposed immediately upstream of the pressure regulator. Downstream of the regulator A is a tool or component (not shown) that requires fluid at low pressure. The pressure regulator A selectively controls passage of fluid from the source to the downstream use.

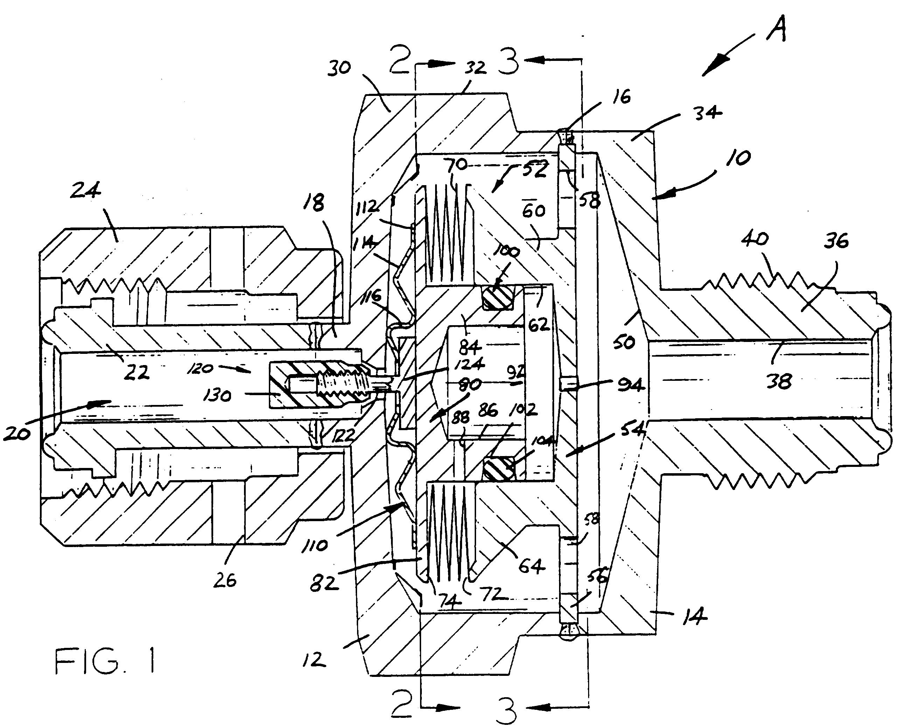

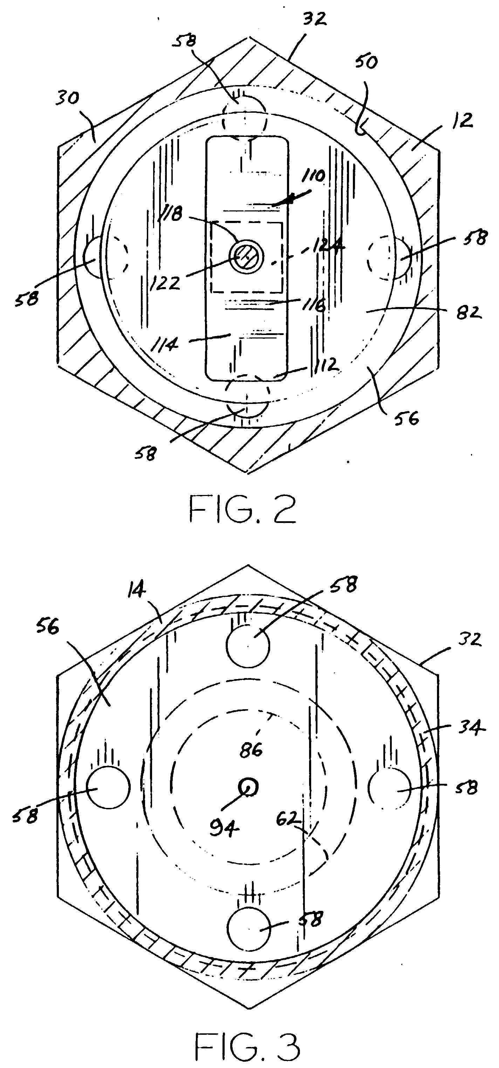

More particularly, and with reference to Figs. 1 to 4, the pressure regulator has a body or housing 10 having a first portion 12 and a second portion 14. The first and second housing portions are integrally joined at an interface region 16 through a welding operation that will be described in greater detail below. The first housing portion 12 has a small diameter extension 18 that communicates with a fluid line or passage defining an inlet 20 to the regulator. As shown, the fluid line is a well known type of coupling member 22 that is secured by an encompassing connector, such as nut 24, to the upstream portion of the fluid system. Preferably, the coupling member 22 is welded to the extension 18 to hermatically seal the regulator. Further, the nut 24 has a radial passage 26 therethrough defining a test port to monitor the integrity of the seal between the extension and the fluid system. The extension 18 extends axially from an enlarged diameter region 30 of the first housing portion 12. To facilitate connection with the fluid system, tool-engaging surfaces, such as wrench flats 32 (Figs. 2, 3), are provided along the periphery of the enlarged diameter region 32.

As shown in Fig. 1, the second housing portion 14 has a similar large diameter region 34 that integrally merges into a conventional reduced diameter coupling member 36 defining outlet 38. The coupling member 36 preferably has an externally threaded region 40 to provide means for connection with the downstream portion of the fluid system. Other coupling arrangements can be used without departing from the invention.

The housing portions 12, 14 form a cavity or chamber 50 therein. The chamber 50 is in continuous fluid communication with the outlet 38 and in controlled communication with inlet 20. Communication with inlet 20 is controlled by regulating means 52 received in the chamber 50. More specifically, the regulating means 52 includes a first or stationary part 54 that is fixedly secured to the housing 10 along a radially outer edge of a disc 56. The disc 56 has axial passages 58 that permit fluid flow therethrough. An axial sleeve 60 extends from the disc 56 towards the inlet 20 and has a recess 62 for reasons which will be described below. The sleeve 60 also has a shoulder 64 that increases in diameter axially towards the inlet 20.

An expansible member, such as bellows 70, is secured at one end 72 to the shoulder 64. For high pressure applications, the bellows is defined by a series of substantially flat bellow discs that are alternately welded on the inside and outside to an adjacent disc.

A second end 74 of the bellows 70 is secured to a second or movable part 80 of the regulating means 52. More particualarly, the movable part 80 has a disc 82 at one end to which the second end 74 of the bellows 70 is welded. A reduced diameter cylindrical portion 84 of the movable part 80 is integrally formed with the disc 82 and extends axially towards the outlet 38 for close receipt in the recess 62 of the stationary part 54. Preferably, the diameter of the cylindrical portion 84 also closely approximates the minimum diameter of the bellows 70 to provide support therefore, if required.

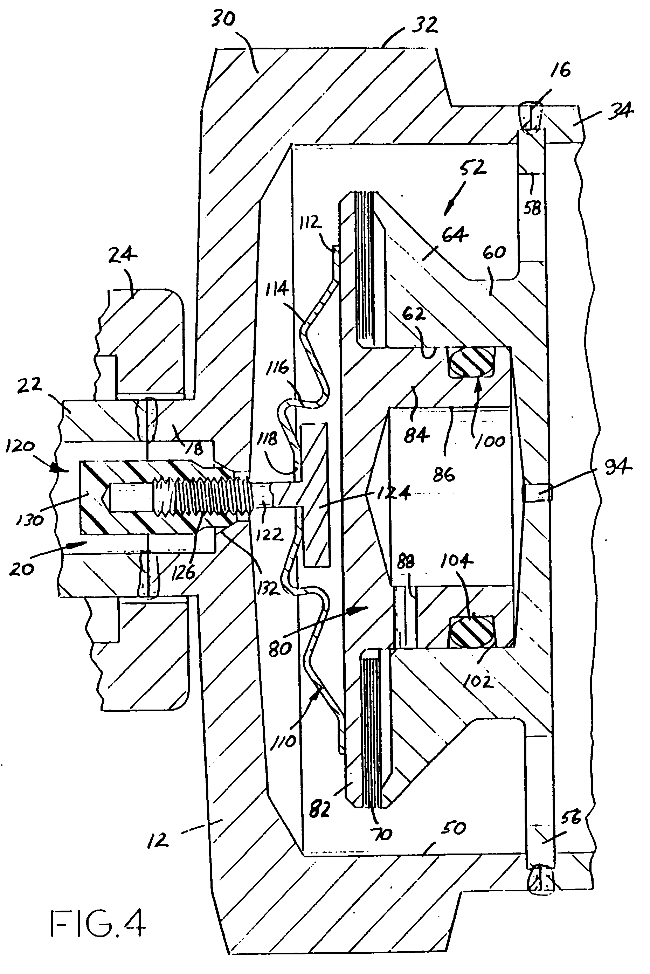

A recess 86 is provided in the cylindrical portion 84 and communicates with the bellows interior through radial opening 88 to define a closed cavity 92 in the regulating means as illustrated in Figs. 1 and 4. The closed cavity 92 receives a predetermined pressure charge therein that establishes the opening and closing pressure values of the regulator. A charging port 94 in the disc 56 of the stationary part 54 permits the closed cavity 92 to be pressurized and is then sealed to maintain the pressure charge therein. If a greater system fluid pressure exists in the housing chamber 50 than in the closed cavity 92, then the bellows 70 is compressed and the poppet (to be described) moves towards closure. Conversely, if fluid pressure in the chamber 50 is less than that in the closed cavity 92, then the bellows 70 will expand to permit fluid flow.

To limit audible buzzing and associated fluctuations in the downstream fluid pressure associated with high flow rates, means 100 for damping movement between the first and second parts 54, 80 of the regulating means 52 is provided. In the preferred arrangement, the damping means 100 includes a resilient member, such as O-ring 104, received in a circumferentially continuous groove 102. The O-ring 104 exerts a slight, controlled drag on the movement of the movable part 80 relative to the stationary part 52, thus limiting oscillations of the regulating means at high flow rates.

A stem clip 110 is attached to the inlet side of the disc 82. The stem clip 110 is preferably oblong and symmetrically configured about the longitudinal axis as illustrated in Figs. 1, 2 and 4. Due to the symmetrical arrangement, description of the lower half of the stem clip is applicable to the upper half unless noted otherwise. The stem clip 110 is spot-welded along an outer edge 112 to disc 82. A central portion of the clip 110 is thus adapted for selective flexing if required. A bend 114 is defined radially inwardly from the outer edge 112 and the bend extends initially towards the inlet 20 and then towards the regulating means 52. The stem clip 110 is then bent again sharply towards the inlet 20 to define a substantially axial portion 116 that defines a stop limit for movement of the regulating means 52 towards the inlet 20. Specifically, the stem clip 110 abuttingly engages the housing 10 adjacent the inlet 20 under preselected pressure conditions. The stem clip 110 then is bent one more time towards the outlet 38 and has a central opening 118 of a first predetermined dimension.

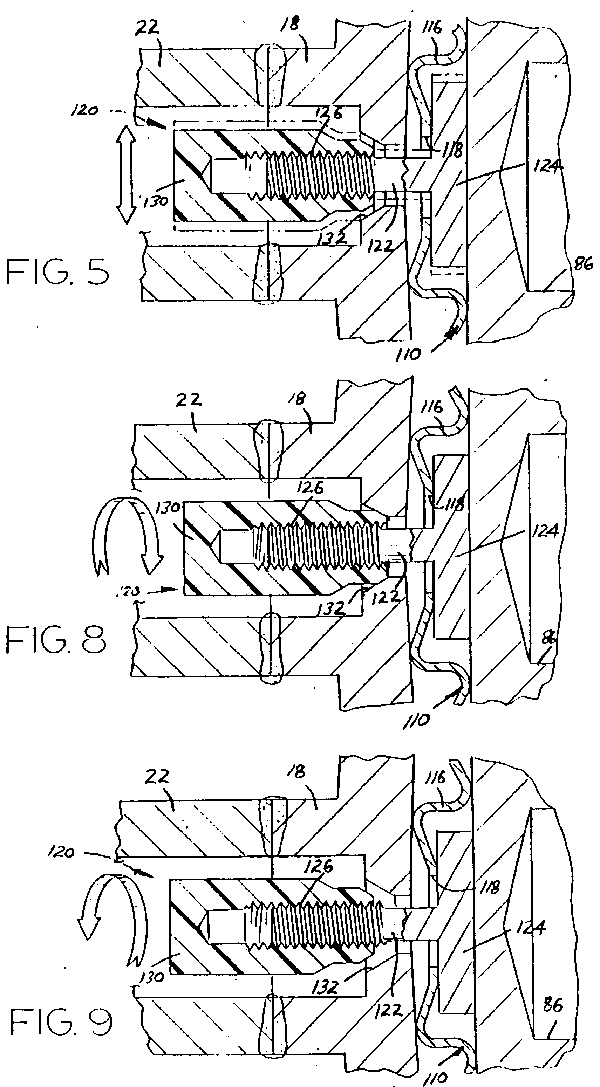

A poppet assembly 120 extends substantially axially outwards from the regulating means 52 and into the inlet 20. The poppet assembly 120 includes a stem 122 having an enlarged rectangular base 124 retained by the stem clip 110. An axial portion of the stem 122 has a diameter significantly smaller than the first predetermined dimension of the central opening 118. These dimensional relationships permit radial movement of the poppet assembly 120 relative to the stem clip 110, and likewise relative to the remainder of the regulating means 52, as represented by the arrow and phantom views in Fig. 5. Particularly, the rectangular base 124 substantially prevents rotation of the poppet assembly 120 relative to the stem clip 110 due to engagement of the corners of the base 124 with axial portions 116 of the clip 110. Nevertheless, there is substantial play to allow radial movement of the poppet assembly 120 to overcome misalignment. The opposite end 126 of the stem is externally threaded and extends into the inlet 20.

A poppet 130 is threadedly received on the end 126 of the stem 122 remote from the base 124. As shown in Figs. 4 and 5, the poppet 130 is entirely disposed in the inlet 20. In the preferred embodiment, the poppet 130 is formed of a suitable seal material that has a hardness substantially less than that of the material forming the stem 122. Since the stem 122 is externally threaded along one end 126, the poppet 130 is tapped as it is advanced onto the stem 122. Further, because the poppet 130 can be self-tapped, a preferred material is one that seals or grips the threads on the stem 122. By way of example only, a flourocarbon marketed as Kel-F (a trademark of Minnesota Mining and Manufacturing Company) is a preferred poppet material. The Kel-F material imposes a drag on the stem threads that provides a self-locking property. Further, this flourocarbon product does not produce any shavings during the self-tapping process. This is important from the standpoint that shavings or other particles represent a potential contaminant in the fluid system that can interfere with proper seating of the poppet 130 or operation of other components in the fluid system.

The poppet 130 is sized to selectively seal with valve seat 132 defined at the intersection of the inlet 20 with the chamber 50 (Fig. 4). If the system fluid pressure in chamber 50 is greater than the preselected pressure charge in the regulating means 52, the poppet 130 will be urged towards the valve seat 132. If the system fluid pressure is substantially greater than the pressure charge then the poppet 130 will shut off fluid communication between the inlet 20 and outlet 38. Once the fluid pressure in the chamber 50, subsides, the regulating means 52 will unseat the poppet 130 and again establish fluid flow (Fig. 1.).

This pressure regulator will perform better than known regulators at high flow rates due to the incorporation of the damping means 100. The slight drag imposed by the damping means 100 reduces the potential that pressure spikes will result downstream. Additionally, misalignment that might otherwise result from tolerance stack-up is compensated for by the ability of the poppet assembly 120 to move relative to the remainder of the regulating means 52. The stem 122 allows the poppet 130 to centre itself on the valve seat 132 which has a twofold effect. First, the shut-off charcteristics of the regulator improve since the fluid opening between the poppet 130 and valve seat 132 is symmetrical. Secondly, the pressure drop across the regulator is reduced when a downstream valve or similar device is opened. Since the poppet 130 can align itself with respect to the valve seat 132, less pressure is required to open the regulator since less pressure is required to close the regulator in the first place. Conversely stated, the regulator requires less pressure differential to seal the poppet 130 against the valve seat 132 so that the regulator responds more quickly to opening.

The regulator also has no seals or flexible membranes between the system media and atmosphere. This substantially reduces safety concerns associated with prior pressure regulators in which the rupture of a diphragm or bellows could potentially release toxic fluid. Still another benefit of the described regulator is the fail-safe arrangement. Particularly, if the bellows fails, the poppet will close on the valve seat to prevent downstream equipment from being exposed to high pressure. The bellows has a spring rate that tends to flatten the bellows so that if the pressure in the bellows leak out then the regulator moves towards a closed position.

The regulating means 52 is also adapted to support the bellows 70 and prevent total collapse thereof should the seat fail to shut off when, for example, a downstream valve is closed. This avoids damage to the bellows and makes repair of the regulator possible.

With reference to Fig. 4, the flexing of the stem clip 110 is illustrated in greater detail. In a situation where the poppet 130 has closed and the regulating means 52 has completely retracted, the central portion of the stem clip 110 can flex or extend axially to prevent damage to the poppet assembly 120. Without the flexing action, the poppet 130 could potentially be pulled or stripped from its threaded engagement with the stem 122. Such problems can be alleviated with the illustrated stem clip arrangement.

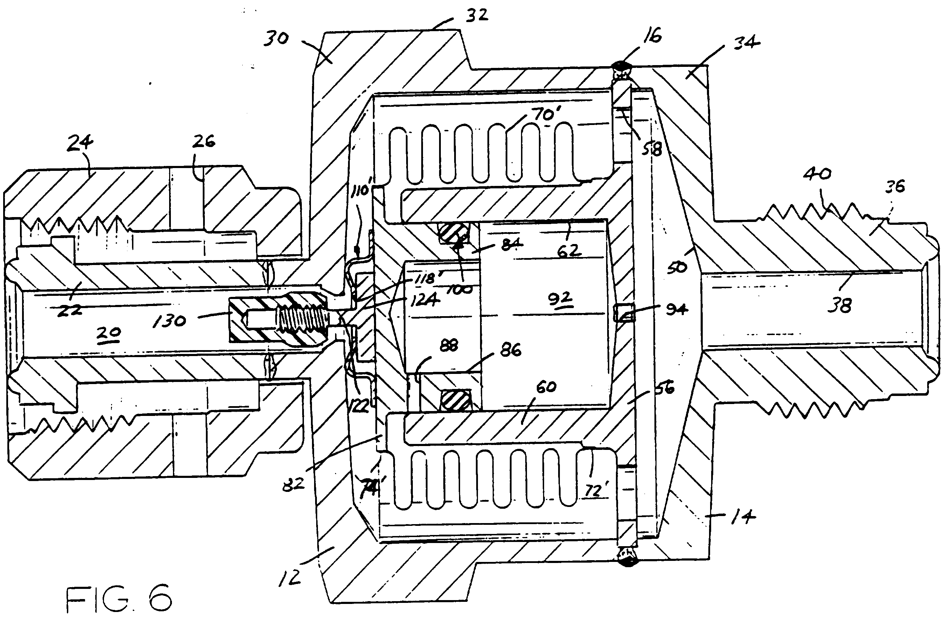

Fig. 6 shows a low pressure regulator that is substantially similar to the high pressure regulator described above. For purposes of brevity, and unless noted otherwise, the structure and function of the low pressure regulator is substantially the same so that like numbers with primed suffixes (′) will refer to like parts. The bellows is not a series of individual welded discs but is substitued with a continuous bellows element 70′. The stem clip 110′ is also altered in the low pressure regulator by eliminating the bend. Thus, the amount of flex or axial travel of the poppet assembly 120 is limited to the flexibility of the clip 110′ around the central opening 118′.

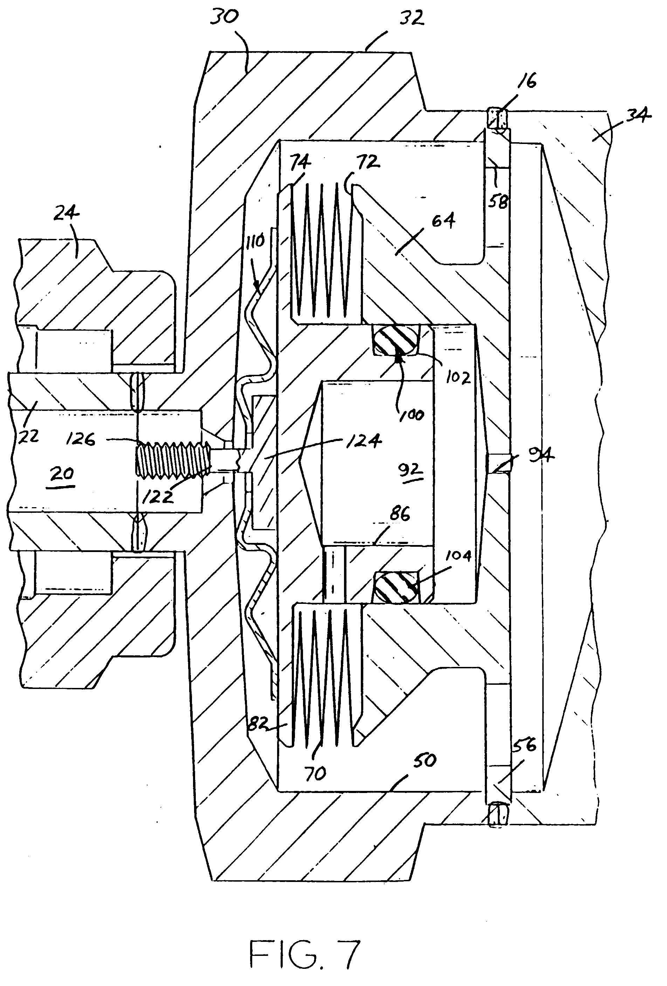

Figs. 7 to 9 represent the novel method of assembling the pressure regulator. The first and second parts 64, 90 of the regulating means 52 are previously secured together by welding opposite ends of the bellows 70 to.the shoulder 64 and disc 82, respectively. The stem 122 is also previously secured to the regulating means 52 by means of the stem clip 110. A weld bead is formed on the outer periphery of the housing 10 at the interface region 16 and extends radially inwardly to secure the disc 56 integrally between the housing portions 12, 14. The closed cavity 92 is pressurized through charging port 94 and a weld bead or other suitable means for sealing the charging port provided. After charging and sealing, with the chamber 50 at atmospheric pressure, the charged regulating means 52 advances towards the inlet until the stem clip abuts the housing. The poppet 130 is then advanced onto the stem 122 through a rotary tapping action until the poppet seals against the seat 132 (Fig. 8). A predetermined torque level will indicate seating of the poppet. Thereafter, the poppet 130 is retracted as demonstrated in Fig. 9 by rotating the poppet in the opposite direction to unseat the poppet. Rotation of the stem 122 is resisted by the rectangular stem base 124 engaging the stem clip 110. Since the pitch of the stem thread is already known, a preselected number of turns of the poppet 130 will precisely set the opening between the poppet 130 and the valve seat 132. Thus, no matter what tolerance problems are encountered during makeup of the remainder of the regulator, the poppet opening will always be the same.

This method of assembling the pressure regulator is significant for at least two reasons. First, the outlet pressure will always be maintained at a predictable value. This eliminates problems related to a regulator being incorrectly set. Secondly, the pressure drop across the valve seat is accurately controlled despite axial tolerance stackups that occur in the assembly.

The invention has been described with reference to the preferred embodiments. Modifications and alterations may be made. For example, the disc 82 may be eliminated from the movable part 90 of the regulating means 52 (Fig. 1). Instead of the bellows configurations described above, a flexible membrane, such as a diphragm, could be secured along its periphery to the shoulder 64 of the sleeve 60. The diaphragm would preferably be a substantially circular and axially interposed at its central region between the cylindrical portion 84 of the movable part 90 of the regulating means 52 and the stem clip/stem 110, 122. Although such a modification to the pressure regulator would result in a regulator larger than the bellows embodiments described above, it would still be much more compact than conventional diaphragm-type regulators and probably less expensive to manufacture than the welded bellows arrangement of Fig. 1.

## Claims

1. A fluid pressure regulator comprising a a housing (10) having a chamber (50) defined therein; an inlet (20) and an outlet (38) operatively communicating with said chamber (50); means (52) for selectively regulating fluid flow between said inlet (20) and said outlet (38) via said chamber (50), said regulating means (52) comprising a first part (54) secured in said chamber (50), a second part (80) associated therewith and adapted for movement relative to said first part (54) and a sealed axially expansible member (70) connected between the said first and second parts (54,80) to define therewith an enclosed cavity (92) which is internally pressurised to a predetermined pressure above ambient in order to establish the fluid pressure values at which the second part moves relative to the first part in order to control the opening and closing of the regulator, characterised in that the first part (54) comprises a transverse end wall and an axial sleeve (60) which extends from the end wall towards the inlet (20), and the second part (80) comprises a transverse end wall and an axial sleeve (84) which extends from the end wall towards the outlet (38), the said axial sleeves (60 and 84) and being slidably received one within the other to form therebetween the cavity (92), which cavity (92) is in communication with the interior of the sealed axially expansible member (70) and at the same pressure as the interior of the sealed axially expansible member (70) through a radial opening (88) in one of the sleeves (60,84) and that resilient damping means (100) is provided between the sleeves (60,84) for damping oscillations thereof under adverse conditions.

2. A pressure regulator as claimed in claim 1, wherein the resilient damping means (100) comprises an O-ring (104), received in circumferencially continuous grooves (102) provided in the axial sleeve of one of the first and second parts (54 and 80).

3. A pressure regulator as claimed in claim 1 or 2 wherein said regulating means (52) is provided with a poppet assembly (120) adapted for selective engagement with a valve seat (132) between said inlet (20) and said outlet (38).

4. A pressure regulator as claimed in claim 3, wherein said poppet assembly (120) includes means for centering it relative to the valve seat (132) or means for enabling it to be self-centering relative to the valve seat (132).

5. A pressure regulator as claimed in claim 4, wherein said centering means or said centering enabling means includes a stem (122) on one end of which a poppet (130) of said poppet assembly (120) is received and having an enlarged base portion (124) at its other end, said stem (122) being retained on said second part (80) by a clip (110) having an opening substantially larger than a transverse dimension of said stem (122) to permit transverse movement of said stem (122) relative to said second part (80).

6. A pressure regulator as claimed in claim 5, wherein said clip (110) limits rotation of said stem (122) relative to said second part (80).

7. A pressure regulator as claimed in any of claims 2 to 6, further comprising means for adjusting the poppet assembly (120) to closely control pressure drop across the valve seat.

8. A pressure regulator as claimed in any of claims 1 to 7, wherein said sealed axially expansible member (70) comprises a bellows (70) connected between said first and second parts (62,80) at least one (80) of said first and second parts having an outer peripheral portion closely received in said bellows (70) to provide support therefor under high pressure conditions.

9. A pressure regulator as claimed in claim 1 or 2, wherein a poppet assembly (120) is provided for opening and closing the communication between the inlet (20) and the outlet (38), the said poppet assembly (120) being connected to said regulating means (52) by connecting means (110) permitting relative movement therebetween.

10. A pressure regulator as claimed in claim 9, wherein said connecting means is fixedly secured to said regulating means (52) along an outer radial portion (112) and retains said poppet assembly (120) along a radial inner portion.

11. A pressure regulator as claimed in claim 9 or 10, wherein said connecting means has an opening (118) through which said poppet assembly (120) is received, said opening (118) being sized to permit lateral movement of said poppet assembly (120) relative to said regulating means (52).

12. A pressure regulator as claimed in claim 9, 10 or 11, further comprising means for limiting rotational movement between said regulating means (52) and said poppet assembly (120).

13. A pressure regulator as claimed in claim 12, wherein said rotational limiting means is provided by a substantially rectangular or square end (124) on said poppet assembly (120) received in a substantially rectangular or square cavity in said connecting means (110).

14. A pressure regulator as claimed in claim 13, wherein said clip (110) limits rotation of said stem (122) relative to said second part (80).

15. A pressure regulator as claimed in any of claims 11 to 14, further comprising means for adjusting the poppet assembly (120) to closely control pressure drop across the valve seat.

16. A pressure regulator as claimed in any of claims 9 to 15, wherein said regulating means (52) includes a bellows (70) interposed between said first and second parts (62,80) at least one (80) of said first and second parts having an outer peripheral portion closely received in said bellows (70) to provide support therefore under high pressure conditions.

## Patentansprüche

1. Fluiddruckregler umfassend ein Gehäuse (10) mit einer darin definierten Kammer (50); einen Einlaß (20) und einen Auslaß (38), die betriebsmäßig mit der genannten Kammer (50) kommunizieren; Mittel (52) zum selektiven Regeln des Fluidflusses zwischen dem genannten Einlaß (20) und dem genannten Auslaß (38) über die genannte Kammer (50), wobei das genannte Regelungsmittel (52) einen ersten, in der genannten Kammer (50) befestigten Teil (54), einen zweiten, diesem zugeordneten und für die Bewegung im Verhältnis zum genannten ersten Teil (54) ausgeführten Teil (80) und ein abgedichtetes, axial ausdehnbares Element (70) aufweist, das zwischen dem genannten ersten und zweiten Teil (54, 80) angeschlossen ist, um damit einen umschlossenen Hohlraum (92) zu definieren, der auf einen vorbestimmten Wert über dem Umgebungsdruck mit Innendruck beaufschlagt wird, um die Fluiddruckwerte aufzubauen, bei denen sich der zweite Teil im Verhältnis zum ersten Teil bewegt, um das Öffnen und Schließen des Reglers zu steuern, dadurch gekennzeichnet, daß der erste Teil (54) eine querliegende Endwand und eine axiale Muffe (60) aufweist, die von der Endwand zum Einlaß (20) hin verläuft, und der zweite Teil (80) eine querliegende Endwand und eine axiale Muffe (84) aufweist, die von der Endwand zum Auslaß (38) hin verläuft, wobei die genannten axialen Muffen (60 und 84) gleitbar ineinander aufgenommen sind, um zwischen sich den Hohlraum (92) zu bilden, wobei dieser Hohlraum (92) mit dem Inneren des abgedichteten, axial ausdehnbaren Elements (70) und mit dem gleichen Druck wie dem im Inneren des abgedichteten, axial ausdehnbaren Elements (70) durch eine radiale Öffnung (88) in einer der Muffen (60, 84) in Verbindung steht und daß zwischen den Muffen (60, 84) ein federndes Dämpfungsmittel (100) zum Dämpfen ihrer Schwingungen unter ungünstigen Bedingungen vorgesehen ist.

2. Druckregler nach Anspruch 1, wobei das federnde Dämpfungsmittel (100) einen in einer in Umfangsrichtung kontinuierlichen Rille (102) aufgenommenen O-Ring (104) aufweist, die in der axialen Muffe entweder des ersten oder des zweiten Teils (54, 80) vorgesehen ist.

3. Druckregler nach Anspruch 1 oder 2, wobei das genannte Regelungsmittel (52) mit einer Spindelventilbaugruppe (120) versehen ist, die für den selektiven Eingriff in einen Ventilsitz (132) zwischen dem genannten Einlaß (20) und dem genannten Auslaß (38) ausgeführt ist.

4. Druckregler nach Anspruch 3, wobei die genannte Spindelventilbaugruppe (120) Mittel zu ihrem Zentrieren im Verhältnis zum Ventilsitz (132) oder Mittel, die es ihr ermöglichen, im Verhältnis zum Ventilsitz (132) selbstzentrierend zu sein, aufweist.

5. Druckregler nach Anspruch 4, wobei das genannte Zentriermittel oder das genannte Zentrierbefähigungsmittel eine Spindel (122) aufweist, an deren einem Ende ein Spindelventil (130) der genannten Spindelventilbaugruppe (120) aufgenommen wird und die an ihrem anderen Ende ein vergrößertes Unterteil (124) hat, wobei die genannte Spindel (122) mit einer Klammer (110) am genannten zweiten Teil (80) gehalten wird, die eine Öffnung hat, die wesentlich größer ist als eine Querabmessung der genannten Spindel (122), um die Querbewegung der genannten Spindel (122) im Verhältnis zum zweiten Teil (80) zuzulassen.

6. Druckregler nach Anspruch 5, wobei die genannte Klammer (110) die Drehung der genannten Spindel (122) im Verhältnis zum zweiten Teil (80) begrenzt.

7. Druckregler nach einem der Ansprüche 2 bis 6, ferner umfassend ein Mittel zum Einstellen der Spindelventilbaugruppe (120) zur genauen Regelung des Druckabfalls am Ventilsitz.

8. Druckregler nach einem der Ansprüche 1 bis 7, wobei das genannte abgedichtete, axial ausdehnbare Element (70) einen Faltenbalg (70) aufweist, der zwischen dem genannten ersten und zweiten Teil (62, 80) angeschlossen ist, wobei vom genannten ersten und zweiten Teil mindestens einer (80) einen äußeren Umfangsabschnitt hat, der im genannten Faltenbalg (70) engpassend aufgenommen ist, um unter Hochdruckbedingungen dafür Unterstützung vorzusehen.

9. Druckregler nach Anspruch 1 oder 2, wobei eine Spindelventilbaugruppe (120) zum Öffnen und Schließen der Verbindung zwischen dem Einlaß (20) und dem Auslaß (38) vorgesehen ist, wobei die genannte Spindelventilbaugruppe (120) mit einem die relative Bewegung dazwischen zulassenden Verbindungsmittel (110) mit dem genannten Regelungsmittel (52) verbunden ist.

10. Druckregler nach Anspruch 9, wobei das genannte Verbindungsmittel an einem äußeren radialen Abschnitt (112) entlang fest am genannten Regelungsmittel (52) befestigt ist und die genannte Spindelventilbaugruppe (120) an einem radialen inneren Abschnitt entlang hält.

11. Druckregler nach Anspruch 9 oder 10, wobei das genannte Verbindungsmittel eine Öffnung (118) hat, durch welche die genannte Spindelventilbaugruppe (120) aufgenommen wird, wobei die genannte Öffnung (118) größenmäßig so ausgeführt ist, daß sie die seitliche Bewegung der genannten Spindelventilbaugruppe (120) im Verhältnis zum genannten Regelungsmittel (52) zuläßt.

12. Druckregler nach Anspruch 9, 10 oder 11, ferner umfassend ein Mittel zum Begrenzen der Drehbewegung zwischen dem genannten Regelungsmittel (52) und der genannten Spindelventilbaugruppe (120).

13. Druckregler nach Anspruch 12, wobei das genannte Drehungsbegrenzungsmittel durch ein wesentliches rechteckiges oder quadratisches Ende (124) an der genannten Spindelventilbaugruppe (120) vorgesehen ist, das in einem wesentlichen rechteckigen oder quadratischen Hohlraum im genannten Verbindungsmittel (110) aufgenommen wird.

14. Druckregler nach Anspruch 13, wobei die genannte Klammer (110) die Drehung der genannten Spindel (122) im Verhältnis zum genannten zweiten Teil (80) begrenzt.

15. Druckregler nach einem der Ansprüche 11 bis 14, ferner umfassend Mittel zum Einstellen der Spindelventilbaugruppe (120) zur genauen Regelung des Druckabfalls am Ventilsitz.

16. Druckregler nach einem der Ansprüche 9 bis 15, wobei das genannte Regelungsmittel (52) einen zwischen dem genannten ersten und zweiten Teil (62, 80) angeordneten Faltenbalg (70) aufweist, wobei vom genannten ersten und zweiten Teil mindestens einer (80) einen äußeren Umfangsabschnitt hat, der im genannten Faltenbalg (70) engpassend aufgenommen ist, um unter Hochdruckbedingungen dafür Unterstützung vorzusehen.

## Revendications

1. Régulateur de pression de liquide comprenant un carter (10) ayant une chambre (50) définie à l'intérieur de celui-ci; une entrée (20) et une sortie (38) communiquant opérationnellement avec ladite chambre (50); un moyen (52) pour réguler sélectivement l'écoulement de liquide entre ladite entrée (20) et ladite sortie (38) par l'intermédiaire de ladite chambre (50), ledit moyen de régulation (52) comprenant une première partie (54) fixée dans ladite chambre (50), une deuxième partie (80) associée à celle-ci et adaptée pour se déplacer par rapport à ladite première partie (54) et un élément scellé s'étendant axialement (70) connecté entre lesdites première et deuxième parties (54,80) pour définir avec celles-ci une cavité fermée (92) qui est pressurisée intérieurement à une pression prédéterminée supérieure à la pression ambiante afin d'établir les valeurs de pression de liquide auxquelles la deuxième partie se déplace par rapport à la première partie afin de commander l'ouverture et la fermeture du régulateur, caractérisé en ce que la première partie (54) comprend une paroi d'extrémité transversale et un manchon axial (60) qui s'étend depuis la paroi d'extrémité vers l'entrée (20), et la deuxième partie (80) comprend une paroi d'extrémité transversale et un manchon axial (84) qui s'étend depuis la paroi d'extrémité vers la sortie (38), lesdits manchons axiaux (60 et 84) étant reçus de manière coulissante l'un dans l'autre pour former entre eux la cavité (92), laquelle cavité (92) est en communication avec l'intérieur de l'élément scellé extensible axialement (70) et à la même pression que l'intérieur de l'élément scellé extensible axialement (70) à travers une ouverture radiale (88) dans l'un des manchons (60,84) et en ce qu'un moyen d'amortissement élastique (100) est fourni entre les manchons (60,84) pour amortir les oscillations de ceux-ci en conditions contraires.

2. Régulateur de pression selon la revendication 1, dans lequel le moyen d'amortissement élastique (100) comprend un joint torique (104), reçu dans des rainures circonférentiellement continues (102) fournies dans le manchon axial de l'une des première et deuxième parties (54 et 80).

3. Régulateur de pression selon la revendication 1 ou 2, dans lequel ledit moyen de régulation (52) est fourni avec un ensemble champignon (120) adapté pour un engagement sélectif d'un siège de soupape (132) entre ladite entrée (20) et ladite sortie (38).

4. Régulateur de pression selon la revendication 3, dans lequel ledit ensemble champignon (120) comporte un moyen pour le centrer par rapport au siège de soupape (132) ou un moyen pour lui permettre de s'autocentrer par rapport au siège de soupape (132).

5. Régulateur de pression selon la revendication 4, dans lequel ledit moyen de centrage ou ledit moyen permettant le centrage comporte une tige (122) sur une extrémité de laquelle un champignon (130) dudit ensemble champignon (120) est reçu et ayant une partie de base élargie (124) à son autre extrémité, ladite tige (122) étant retenue sur ladite deuxième partie (80) par une pince (110) ayant une ouverture sensiblement supérieure à une dimension transversale de ladite tige (122) pour permettre le déplacement transversal de ladite tige (122) par rapport à ladite deuxième partie (80).

6. Régulateur de pression selon la revendication 5, dans lequel ladite pince (110) limite la rotation de ladite tige (122) par rapport à ladite deuxième partie (80).

7. Régulateur de pression selon l'une quelconque des revendications 2 à 6, comprenant en outre un moyen pour régler l'ensemble champignon (120) pour commander étroitement la chute de pression en travers du siège de soupape.

8. Régulateur de pression selon l'une quelconque des revendications 1 à 7, dans lequel ledit élément scellé extensible axialement (70) comprend un soufflet (70) connecté entre lesdites première et deuxième parties (62,80) au moins une (80) desdites première et deuxième parties ayant une partie périphérique externe reçue étroitement dans ledit soufflet (70) pour fournir le support de celui-ci en conditions de pression élevée.

9. Régulateur de pression selon la revendication 1 ou 2, dans lequel un ensemble champignon (120) est fourni pour ouvrir et fermer la communication entre l'entrée (20) et la sortie (38), ledit ensemble champignon (120) étant connecté audit moyen de régulation (52) par un moyen de connexion (110) permettant un déplacement relatif entre eux.

10. Régulateur de pression selon la revendication 9, dans lequel ledit moyen de connexion est fixé solidement audit moyen de régulation (52) le long d'une partie radiale externe (112) et retient ledit ensemble champignon (120) le long d'une partie interne radiale.

11. Régulateur de pression selon la revendication 9 ou 10, dans lequel ledit moyen de connexion a une ouverture (118) au travers de laquelle ledit ensemble champignon (120) est reçu, ladite ouverture (118) étant dimensionnée pour permettre le déplacement latéral dudit ensemble champignon (120) par rapport audit moyen de régulation (52).

12. Régulateur de pression selon la revendication 9, 10 ou 11, comprenant en outre un moyen pour limiter le déplacement rotationnel entre ledit moyen de régulation (52) et ledit ensemble champignon (120).

13. Régulateur de pression selon la revendication 12, dans lequel ledit moyen de limitation rotationnel est fourni par une extrémité sensiblement rectangulaire ou carrée (124) sur ledit ensemble champignon (120) reçue dans une cavité sensiblement rectangulaire ou carrée dans ledit moyen de connexion (110).

14. Régulateur de pression selon la revendication 13, dans lequel ladite pince (110) limite la rotation de ladite tige (122) par rapport à ladite deuxième partie (80).

15. Régulateur de pression selon l'une quelconque des revendications 11 à 14, comprenant en outre un moyen pour régler l'ensemble champignon (120) pour commander étroitement la chute de pression en travers du siège de soupape.

16. Régulateur de pression selon l'une quelconque des revendications 9 à 15, dans lequel ledit moyen de régulation (52) comporte un soufflet (70) interposé entre lesdites première et deuxième parties (62,80) au moins une (80) desdites première et deuxième parties ayant une partie périphérique externe reçue étroitement dans ledit soufflet (70) pour supporter celui-ci en conditions de pression élevée.
